(19) Europäisches Patentamt
European Patent Office
Office européen des brevets

(11) **EP 4 194 944 A1**

(12) **EUROPEAN PATENT APPLICATION**
published in accordance with Art. 153(4) EPC

(43) Date of publication:
**14.06.2023 Bulletin 2023/24**

(21) Application number: **20952854.6**

(22) Date of filing: **11.09.2020**

(51) International Patent Classification (IPC):
**G03B 13/36** (2021.01)     **G02B 7/36** (2021.01)

(52) Cooperative Patent Classification (CPC):
**G02B 7/36; G03B 13/36**

(86) International application number:
**PCT/CN2020/114892**

(87) International publication number:
**WO 2022/052066 (17.03.2022 Gazette 2022/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Ltd. China**
**Beijing 100102 (CN)**

(72) Inventors:
• **XI, Baoshi**
**Shanghai 200082 (CN)**

• **HUA, Tao**
**Shanghai 200129 (CN)**
• **WU, Jianqiang**
**Shanghai 200120 (CN)**
• **LI, Tao**
**Shanghai 200129 (CN)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **METHOD AND APPARATUS FOR REALIZING FOCUSING OF INDUSTRIAL CAMERA**

(57)     A method (200) for realizing the focusing of an industrial camera (102), the industrial camera (102) being fixed to a movable robot (101). The method comprises: moving a robot (101) by a first step length so as to capture a first target image of a target object (105) (S201); determining a first ROI image (S202); evaluating the first ROI image to generate a plurality of first definition values (S203); determining a unimodal search direction on the basis of the plurality of first definition values (S204); according to the unimodal search direction, moving the robot (101) by a second step length so as to capture a second target image of the target object (105) (S205); determining a second ROI image (S206); evaluating the second ROI image to generate a plurality of second definition values (S207); and on the basis of some of the plurality of first definition values and some of the plurality of second definition values, estimating a highest-definition focusing position (S208). As such, rapid and accurate automatic focusing of the industrial camera (102) is realized without manual participation, such that the on-site working efficiency is effectively improved. Moreover, the method can be flexibly adapted to multiple installed industrial cameras (102) and lenses, such that on-site costs are effectively reduced.

Fig.6

## Description

## Technical field

The present disclosure relates to the field of machine vision, in particular to a method and apparatus for focusing an industrial camera, a computing device, a computer-readable storage medium and a program product.

## Background art

Robots are being used to an ever increasing extent in industry, medicine and other fields, but most are used in relatively simple applications. There is a desire to give robots more intelligence, e.g. vision, to adapt to uncertainty and changes in working environments. A system of this type is called a hand-eye system. Depending on the mounting positions of a camera and a robot, hand-eye systems are classified as eye-in-hand systems and eye-to-hand systems. In an eye-in-hand system, the camera is mounted on an extremity of the robot and can move and be used together with the robot; in an eye-to-hand system, the camera is mounted outside the robot, and will not move together with the robot during robot movement.

When a hand-eye system senses environmental information, the acquisition of a clear image is very important. If there is fuzziness in an image captured by a camera due to an out-of-focus object, analytic processing of the image might be misjudged. Thus, fast and accurate automatic focusing technology is especially important in machine vision systems. In the field of machine vision, industrial cameras and lenses are independent; different combinations of cameras and lenses may be chosen for different scenarios, with fixed-focus lenses generally being the most common. At present, focusing of the lens paired with the camera is mainly carried out manually in a hand-eye system, with a person making a subjective judgment of image clarity to judge whether the lens is at the position of focus; such a method has low efficiency and a complex process of operation.

Existing automatic focusing technologies for ordinary cameras have various shortcomings in the field of machine vision. For example, focusing is not precise enough; selection of the focusing region is difficult; focusing stability is poor, and easily affected by environmental factors (such as dust and vibration in the environment); focusing speed is low, failing to meet the requirements of the machine vision system (for example, if the focusing time is too long, it will not be possible to guarantee completion of the industrial task).

## Summary of the invention

In existing methods of focusing an industrial camera, the camera must be focused manually for various application environments. However, manual focusing has low efficiency and a complex process of operation, and is highly dependent on the operator's subjective judgment and experience. Besides the fact that existing automatic focusing technologies for ordinary cameras have various shortcomings in the field of machine vision, compared with ordinary cameras, industrial cameras lack a focusing motor (e.g. voice coil motor), so focusing methods for ordinary cameras are not suitable for industrial cameras, and will struggle to adapt to environmental influences (such as dust and vibration in the environment) and meet the requirements of the machine vision system (for example, if the focusing time is too long, it will not be possible to guarantee completion of the industrial task).

A first embodiment of the present disclosure proposes a method for focusing an industrial camera, the camera being fixed to a movable robot and having a fixed-focus lens, the method comprising the following steps: S1, moving the robot at a first step length to use the industrial camera to capture a first target image of a target object at a first plurality of positions respectively; S2, determining a first ROI image in the first target image according to a reference pattern, the first ROI image corresponding to an ROI in a focusing region of the industrial camera; S3, evaluating the first ROI images determined at the first plurality of positions to generate a first plurality of clarity values; S4, determining a unimodal search direction based on the first plurality of clarity values; S5, moving the robot at a second step length according to the unimodal search direction to use the industrial camera to capture a second target image of the target object at a second plurality of positions respectively, the second step length being smaller than the first step length; S6, determining a second ROI image in the second target image according to the reference pattern, the second ROI image corresponding to the ROI in the focusing region of the industrial camera; S7, evaluating the second ROI images determined at the second plurality of positions to generate a second plurality of clarity values; S8, estimating a position of clearest focus based on a portion of the first plurality of clarity values and a portion of the second plurality of clarity values.

In this embodiment, fast and accurate automatic focusing of the industrial camera can be achieved, with high focusing precision; the focusing region can be selected easily, the stability of focusing is high, the method is not affected by environmental factors, there is no need for human participation, on-site working efficiency is increased effectively, and the method can be flexibly applied to various installed industrial cameras and lenses, thereby reducing on-site costs effectively.

A second embodiment of the present disclosure provides a computing device, comprising: a processor; and a memory, used to store computer-executable instructions which, when executed, cause the processor to perform the following steps: S1, moving the robot at a first step length to use the industrial camera to capture a first target image of a target object at a first plurality of positions respectively; S2, determining a first ROI image in the first target image according to a reference pattern, the first ROI image corresponding to an ROI in a focusing region of the industrial camera; S3, evaluating the first ROI images determined at the first plurality of positions to generate a first plurality of clarity values; S4, determining a unimodal search direction based on the first plurality of clarity values; S5, moving the robot at a second step length according to the unimodal search direction to use the industrial camera to capture a second target image of the target object at a second plurality of positions respectively, the second step length being smaller than the first step length; S6, determining a second ROI image in the second target image according to the reference pattern, the second ROI image corresponding to the ROI in the focusing region of the industrial camera; S7, evaluating the second ROI images determined at the second plurality of positions to generate a second plurality of clarity values; S8, estimating a position of clearest focus based on a portion of the first plurality of clarity values and a portion of the second plurality of clarity values.

A third embodiment of the present disclosure provides an apparatus for focusing an industrial camera, the industrial camera being fixed to a movable robot and having a fixed-focus lens, the apparatus comprising: an image capturing unit, configured to move the robot at a first step length, and acquire a first target image of a target object captured by the industrial camera at a first plurality of positions respectively; an image determining unit, configured to determine a first ROI image in the first target image according to a reference pattern, the first ROI image corresponding to an ROI in a focusing region of the industrial camera; an image evaluating unit, configured to evaluate the first ROI images determined at the first plurality of positions to generate a first plurality of clarity values; a direction determining unit, configured to determine a unimodal search direction based on the first plurality of clarity values; wherein, once the direction determining unit has determined the unimodal search direction: the image capturing unit is further configured to: move the robot at a second step length according to the unimodal search direction, and acquire a second target image of the target object captured by the industrial camera at a second plurality of positions respectively, the second step length being smaller than the first step length; the image determining unit is further configured to: determine a second ROI image in the second target image according to the reference pattern, the second ROI image corresponding to the ROI in the focusing region of the industrial camera; the image evaluating unit is further configured to evaluate the second ROI images determined at the second plurality of positions to generate a second plurality of clarity values; and a position estimating unit, configured to estimate a position of clearest focus based on a portion of the first plurality of clarity values and a portion of the second plurality of clarity values.

A fourth embodiment of the present disclosure proposes a computer-readable storage medium, having stored thereon computer-executable instructions for performing the method described in the first embodiment.

A fifth embodiment of the present disclosure proposes a computer program product, tangibly stored on a computer-readable storage medium and comprising computer-executable instructions which, when executed, cause at least one processor to perform the method described in the first embodiment.

**Brief description of the drawings**

The features, advantages and other aspects of the embodiments of the present disclosure will become more obvious in conjunction with the drawings and with reference to the following detailed explanation. A number of embodiments of the present disclosure are presented here in an exemplary but non-limiting fashion. In the drawings:

Fig. 1 shows an exemplary scenario in which the embodiments of the present disclosure may be applied.

Fig. 2 shows a flow chart of a method for focusing an industrial camera according to an embodiment of the present disclosure.

Fig. 3 shows an exemplary reference pattern which may be used for focusing of an industrial camera according to an embodiment of the present disclosure.

Fig. 4 shows another exemplary reference pattern which may be used for focusing of an industrial camera according to an embodiment of the present disclosure.

Fig. 5 shows a schematic figure of a focusing evaluation curve according to an embodiment of the present disclosure.

Fig. 6 shows an exemplary system for focusing an industrial camera according to an embodiment of the present disclosure.

Fig. 7 shows a block diagram of an exemplary apparatus for focusing an industrial camera according to an embodiment of the present disclosure.

Fig. 8 shows a block diagram of an exemplary computing device for focusing an industrial camera according to an embodiment of the present disclosure.

## Detailed description of the invention

Various exemplary embodiments of the present disclosure are described in detail below with reference to the drawings. Although the exemplary methods and apparatuses described below include software and/or firmware executed on hardware in other components, it should be noted that these examples are merely illustrative, and should not be regarded as limiting. For example, any or all hardware, software and firmware components may be implemented in hardware exclusively, in software exclusively, or in any combination of hardware and software. Thus, although exemplary methods and apparatuses have been described below, those skilled in the art should easily understand that the examples provided are not intended to limit the means used to realize these methods and apparatuses.

In addition, the flow charts and block diagrams in the drawings show possible system architectures, functions and operations of methods and systems according to the embodiments of the present disclosure. It should be noted that the functions marked in the boxes may also occur in a different order from that marked in the drawings. For example, two boxes shown as one following the other may in fact be executed substantially in parallel, or may sometimes also be executed in the opposite order, depending on the functions involved. It should likewise be noted that each box in the flow charts and/or block diagrams, and combinations of boxes in the flow charts and/or block diagrams, may be realized using a dedicated hardware-based system for executing a specified function or operation, or may be realized using a combination of dedicated hardware and computer instructions.

The terms "comprise", "include" and similar terms used herein are open terms, i.e. "comprises/includes but is not limited to", indicating that other content may be also be included. The term "based on" is "at least partially based on". The term "an embodiment" means "at least one embodiment"; the term "another embodiment" means "at least one other embodiment", and so on.

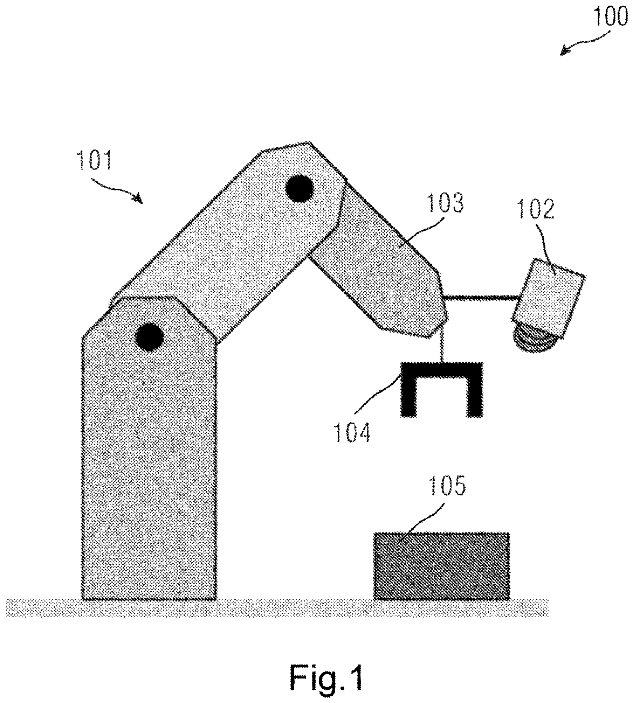

Fig. 1 shows an exemplary scenario 100 in which the embodiments of the present disclosure may be applied. The scenario 100 comprises a robot 101 and an industrial camera 102 fixed to the robot 101. For example, the robot 101 may be a machine apparatus with multiple degrees of freedom or a multi-jointed mechanical hand for industry. The robot 101 comprises a movable extremity 103; the camera 102 may be fixed to the extremity 103 and move together with the extremity 103 of the robot 101. The camera 102 carries a fixed-focus lens. A tool 104 may also be fitted to the extremity 103 of the robot 101, for performing an operation on a real object in the scenario 100. A target object 105 is also arranged in the scenario 100. The target object 105 may be a real object to be operated, with a surface thereof having a specific reference pattern (e.g. by attaching a label with a reference pattern to a flat surface part of the object) to allow the camera 102 to perform focusing. Alternatively, the target object 105 may be a reference object for the camera 102 to observe the real object, the reference object being placed at the position where the real object is to be operated, and having the same appearance (e.g. having the same height) as the real object, and having a specific reference pattern on a surface thereof to allow the camera 102 to perform focusing; once focusing has been completed for the reference object, the reference object may be replaced with the real object.

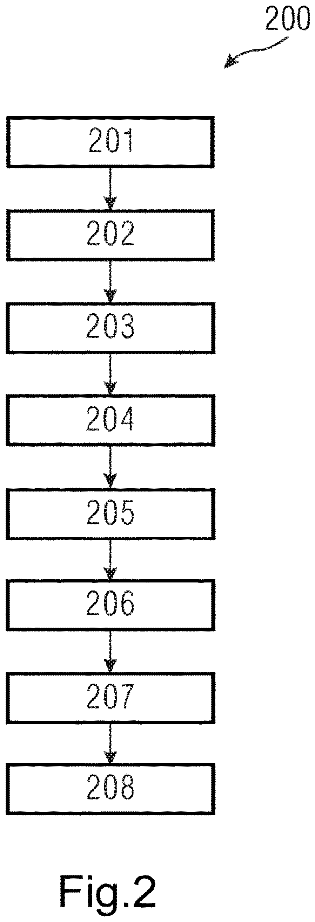

As an example but without limitation, the robot 101 may for example also be a robot carried by an AGV (Automated Guided Vehicle), etc. When the industrial camera 102 moves towards the target object 105 in a particular direction (e.g. perpendicular to a surface of the target object 105) with the robot 101 or the extremity 103 thereof, the size of the field of view and the working distance WD (i.e. the distance from a mechanical face at the lowermost end of the lens to the object) of the lens of the camera 102 also change accordingly. The working distance WD of the lens of the camera 102 may be adjusted by the focusing method for an industrial camera described below with reference to Figs. 2 - 5 (e.g. driven by an actuating mechanism such as a robot) so that the camera 102 is located at the position of focus.

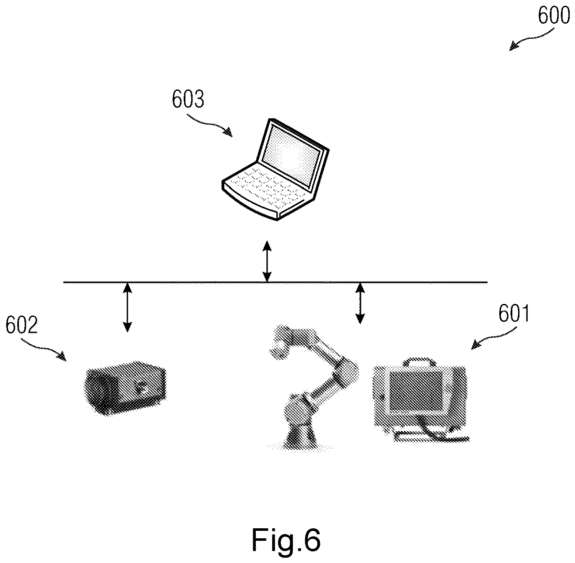

Fig. 2 shows a flow chart of a method 200 for focusing an industrial camera according to an embodiment of the present disclosure, wherein the industrial camera is fixed to a movable robot and has a fixed-focus lens. The method 200 may be applied to the exemplary scenario 100 as shown in Fig. 1 (including the robot 101 and the industrial camera 102) and an exemplary system 600 as shown in Fig. 6. For example, the method 200 may be realized by a computing device 603 communicatively coupled to a robot 601 and an industrial camera 602 in the exemplary system 600 in Fig. 6, and need not be realized by the industrial camera itself, so will not occupy storage space of the camera or cause camera instability, and thus can be flexibly applied to various combinations of cameras and lenses.

Referring to Fig. 2, the method 200 begins at step 201. In step 201, the robot is moved at a first step length to use the industrial camera to capture a first target image of the target object at a first plurality of positions respectively. For example, the camera 102 may be moved (e.g. by moving the extremity 103) to a first plurality of positions respectively (e.g. moved from far away from the target object to close to the target object, or vice versa) at a first rate by sending a movement instruction to the robot 101, such that the camera 102 captures a first target image of the target object 105 at the first plurality of positions respectively. The camera 102 may comprise an image sensor (e.g. a CCD/CMOS) for capturing images, and a cache region or storage region for storing images.

Next, the method 200 proceeds to step 202. In step 202, a first ROI image in the first target image is determined according to a reference pattern, the first ROI image corresponding to an ROI (region of interest) in a focusing region of the industrial camera. For example, the target object 105 may have a reference pattern, and when the robot 101 is moved to different positions, i.e. when the camera 102 is moved to different positions, part or all of the reference pattern may be selected as a focusing window or region to capture an image of the target object 105, such that part or all of the reference pattern falls within the ROI, and once the image has been captured, the first ROI image corresponding to the ROI may be determined according to the reference pattern. For example, the reference pattern may comprise a pattern feature easily distinguishable by the camera to allow the target object to be positioned in the field of view of the camera, while interference to the target image due to the background, for example, may be avoided. Unlike the use of a reference pattern (e.g. a checkerboard texture pattern) to obtain an internal reference and external reference of a camera during camera calibration, the reference pattern is used for camera focusing in the embodiments of the present disclosure.

In some embodiments, the reference pattern comprises pattern sets arranged in a first direction, each of the pattern sets comprising a first region and a second region, the first region having a first color, and the second region having a second color different from the first color. Because the first and second regions have different colors, a sharp change occurs between regions, so rich image edge information is provided, while the effects of noise for example on the image can be advantageously reduced.

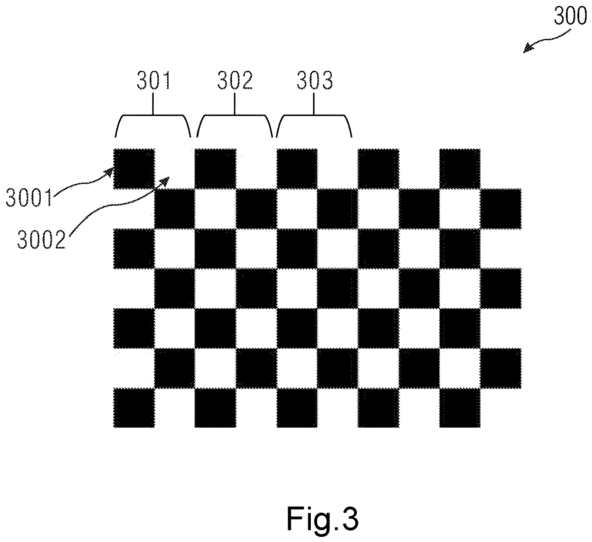

Fig. 3 shows an exemplary reference pattern 300 which may be used for focusing of an industrial camera according to an embodiment of the present disclosure. The reference pattern 300 comprises pattern sets 301, 302 and 303, each pattern set comprising a first region 3001 of a first color (e.g. black) and a second region 3002 of a second color (e.g. white), the first direction being the direction from left to right. The reference pattern 300 is a checkerboard texture pattern, and also has pattern sets arranged in a second direction, the second direction being arranged at an angle (e.g. 90 degrees) to the first direction.

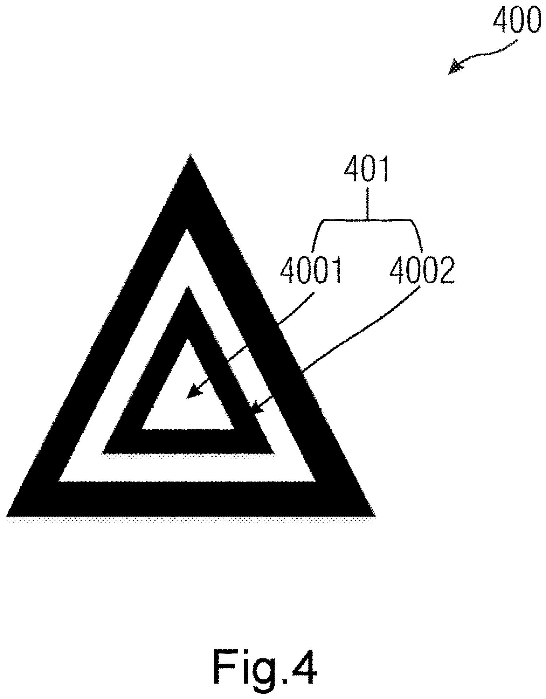

Fig. 4 shows an exemplary reference pattern 400 which may be used for focusing of an industrial camera according to an embodiment of the present disclosure. The reference pattern 400 comprises a pattern set 401, the pattern set 401 comprising a first region 4001 of a first color (e.g. white) and a second region 4002 of a second color (e.g. white), the first direction being the direction from inside to outside. The reference pattern 400 is a texture pattern of nested triangles.

It should be understood that the reference patterns of Figs. 3 and 4 merely serve as examples and do not limit the present disclosure; pattern sets arranged in various shapes and directions may also be used. For example, the first region and second region may be arranged alternately. In addition, each pattern set may comprise another region in addition to the first region and second region; the embodiments of the present disclosure do not impose any limitations in this respect.

In an example using reference pattern 300, p x q squares of reference pattern 300 may be configured to fall within the focusing window or region, and a part of the first target image that corresponds to the p x q squares is selected as a first ROI image, wherein the checkerboard texture pattern of Fig. 3 may have squares of the same size or squares of different sizes. In an example using reference pattern 400, 2 x m triangles of reference pattern 400 may be configured to fall within the focusing window or region, and a part of the first target image that corresponds to the 2 x m triangles is selected as a first ROI image. Compared with reference pattern 400, reference pattern 300 makes it easier to quickly evaluate image clarity.

Next, the method 200 proceeds to step 203. In step 203, the first ROI images determined at the first plurality of positions are evaluated to generate a first plurality of clarity values. Clarity is an important index for measuring the quality of digital images and whether they are focused properly. Image clarity is similar to fidelity of image details. The more image details retained, the higher the contrast, the clearer the image, and the higher the resolution. In this way, a judgment can be made as to whether the camera is at the position of focus by evaluating clarity.

In some embodiments, step 203 may comprise: based on the grayscale of each pixel point of the first ROI images determined at the first plurality of positions, using a first image evaluation function to evaluate the first ROI images to generate a first plurality of clarity values, the first image evaluation function comprising a gradient function. Because the change in grayscale value of edge pixels of the reference pattern is large, the gradient value is larger, and clarity can be evaluated by the change in grayscale of the image (e.g. grayscale weight values of adjacent pixel points). For example, first and second image evaluation functions may comprise gradient functions, which may be used to evaluate changes in grayscale. Gradient functions may include but are not limited to: an energy gradient function EOG, Roberts function, Tenengrad function, Brenner function, Variance function, Laplace function, or combinations thereof. Ideally, each type of gradient function is unimodal and unbiased, and obtains the maximum evaluation value at the position of focus. In some examples, the first and/or second image evaluation function(s) may further comprise an entropy function, frequency spectrum function, statistical function, or a combination of the various functions above, or a combination of the various functions and gradient functions above to comprehensively evaluate clarity.

In a focused image, an edge region of the image tends to be smaller. For the majority of non-edge pixels, the gradient value is very small. These non-edge regions are not suitable for characterizing image clarity. Conventional methods of using image gradient for focusing tend to simply use an average gradient value of the whole image to characterize image clarity. However, such conventional methods have two problems. Firstly, for focused images with very few texture edges, if a focused region is not chosen correctly, then a small number of image edge points having larger gradient values will often be associated with a large number of non-edge points having smaller gradient values, and so will not be able to be distinguished. Secondly, at a certain distance from the position of focus, irregular background noise will arise. These noisy images have a large number of texture edges, and this will result in a large number of peaks appearing in the clarity curve. As stated above, in the present disclosure, the reference pattern is used to determine the ROI image corresponding to the ROI in the focusing region, so rich image edge information is provided, while the effects of noise for example on the image can be advantageously reduced.

In some embodiments, the gradient function may comprise a gradient function based on the Sobel operator. For example, the gradient function may be the Tenengrad function based on the Sobel operator, see equations (1) - (4) below:

$$f(I) = \sum_x \sum_y S(x,y), \quad S(x,y) > T \qquad (1)$$

$$S(x,y) = \sqrt[2]{G_x^2(x,y) + G_y^2(x,y)} \qquad (2)$$

$$G_x = [f(x+1, y-1) + 2*f(x+1,y)] + f(x+1,y+1) - \qquad (3)$$
$$[f(x-1, y-1) + 2*f(x-1,y) + f(x-1,y+1)]$$

$$G_y = [f(x-1, y-1) + 2*f(x, y-1) + f(x+1, y-1)] - \qquad (4)$$
$$[f(x-1, y-1) + 2*f(x, y+1) + f(x+1, y+1)]$$

The Tenengrad function $f(I)$ is defined as the sum of squares of pixel point gradients, and a threshold T is set for the gradient to adjust the sensitivity of the function; $S(x,y)$ is the gradient at the point of pixel $(x,y)$; $G_x$ and $G_y$ are the gradient values of the pixel point in horizontal and vertical direction. The Tenengrad function is simple to compute, and its speed of implementation can meet the real-time requirements of machine vision systems (especially hand-eye systems).

In one example, the absolute-value Tenengrad function based on the Sobel operator may further be used, i.e. $S(x,y) = |G_x(x,y)| + |G_y(x,y)|$ is defined in order to further reduce the computation amount and increase the implementation speed.

Next, the method 200 proceeds to step 204. In step 204, a unimodal search direction is determined on the basis of the first plurality of clarity values. In various focusing scenarios, the focusing curve struggles to satisfy the characteristic of a single peak, and the actual curve often has a local peak, sometimes resulting in focusing falling within the local peak and causing focusing errors; for this reason, it is necessary to seek a single peak of the clarity curve. For example, determining a unimodal search direction can further facilitate the estimation of a position of focus in a unimodal region.

In some embodiments, step 204 may comprise: identifying the longest increasing subsequence of the first plurality of clarity values; determining a position movement direction corresponding to the longest increasing subsequence as the unimodal search direction. For example, for an unordered sequence of a first plurality of clarity values $a_1, a_2, a_3, a_4, ... a_n$, the longest increasing subsequence $a_i <= a_j <= a_k ... <= a_m$, $i<j<k... <m$, in the sequence may be sought by means of a dynamic plan for example, and the position movement direction corresponding to the longest increasing subsequence may be determined as the unimodal search direction.

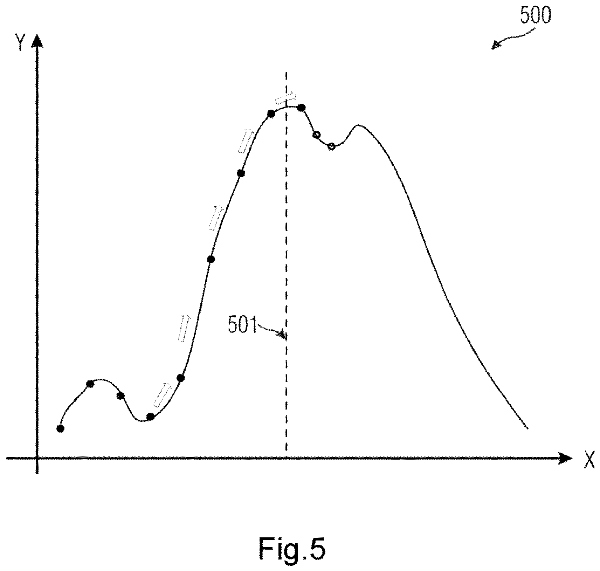

Fig. 5 shows a schematic figure of a focusing evaluation curve (or clarity curve) 500 according to an embodiment of the present disclosure. The X axis represents the working distance WD of the camera, and the Y axis represents the clarity evaluation value. The solid round points on the curve 500 represent movement of the robot to different positions at a first step length and the corresponding clarities of the first ROI images determined. An actual position of focus 501 is shown in Fig. 5, and the longest increasing subsequence identified is shown by the direction of the arrows; as shown in the figure, by identifying the longest increasing subsequence and determining the unimodal search direction, it is possible to effectively prevent the position of focus from falling on the first local peak in the curve 500.

Next, the method 200 proceeds to step 205. In step 205, according to the unimodal search direction, the robot is moved at a second step length in order to use the industrial camera to capture a second target image of the target object at a second plurality of positions respectively, the second step length being smaller than the first step length. In this step, after roughly seeking and discovering the focusing region by means of the larger step length (i.e. the first step length), the actual position of focus may be sought precisely by means of the smaller step length (i.e. the second step length).

Next, the method 200 proceeds to step 206. In step 206, a second ROI image in the second target image is determined according to the reference pattern, the second ROI image corresponding to the ROI in the focusing region of the industrial camera. This step is similar to step 202 above, so details are not repeated.

Next, the method 200 proceeds to step 207. In step 207, the second ROI images determined at the second plurality of positions are evaluated to generate a second plurality of clarity values. In some embodiments, step 207 may comprise: based on the grayscale of each pixel point of the second ROI images determined at the second plurality of positions, using a second image evaluation function to evaluate the second ROI images to generate a second plurality of clarity values, the second image evaluation function comprising a gradient function. In some embodiments, the gradient function may comprise a gradient function based on the Sobel operator. This step is similar to step 203 above, so details are not repeated.

Next, the method 200 proceeds to step 208. In step 208, based on a portion of the first plurality of clarity values and a portion of the second plurality of clarity values, the position of clearest focus is estimated. In this step, the entire clarity curve may be traversed at the first step length to seek a portion of the obtained clarity values, and a portion of the obtained clarity values may be sought at the second step length, in order to estimate the actual position of focus, with no need to perform a traversal search on the clarity curve at the second step length, so computation can be reduced and focusing speed increased. For example, when the robot is moved to different positions at the second step length to obtain multiple consecutively decreasing clarity values, movement at the second step length may be stopped. Referring to Fig. 5, the hollow round points on the curve 500 represent movement of the robot to different positions at the second step length and the corresponding clarities of the second ROI images determined.

In some embodiments, step 208 may comprise: based on a final plurality of clarity values in the longest increasing subsequence of the first plurality of clarity values and multiple consecutively decreasing clarity values in the second plurality of clarity values, curve fitting is used to estimate the position of clearest focus. In this step, taking into account the fact that the position corresponding to the final point in the longest increasing subsequence might fall before or after the actual position of focus, and taking into account the possible effects of noise on the clarity values, a final plurality of clarity values in the longest increasing subsequence and multiple consecutively decreasing clarity values in the second plurality of clarity values are chosen, and curve fitting is used to quickly estimate the actual position of focus.

For example, as shown in Fig. 5, starting at the position preceding the largest position of the previous search (i.e. at the first step length), a smaller step length (i.e. the second step length) is set, and a clarity value and position data are recorded each time, until a second consecutively decreasing point of clarity value is found, and movement is then stopped. Next, four points close to the peak of the curve are used, i.e. the final 2 points in the longest increasing subsequence of the first plurality of clarity values and two consecutively decreasing points of the second plurality of clarity values are used, and a cubic spline curve fitting function is used for fitting, in order to estimate the position of the focus extremum (i.e. the position of clearest focus). In other examples, different numbers of points and curve fitting methods may also be used for fitting, in order to estimate the position of the focus extremum.

According to the embodiments of the present disclosure, besides the abovementioned advantages, fast and accurate automatic focusing of the industrial camera can be achieved, without the need for human participation; on-site working efficiency is increased effectively, and the method can be flexibly applied to various installed industrial cameras and lenses, thereby reducing on-site costs effectively.

Fig. 6 shows an exemplary system 600 for focusing an industrial camera according to an embodiment of the present disclosure. The exemplary system 600 comprises a robot 601, an industrial camera 602 and a computing device 603. The robot 601 may be similar to the robot 101 in Fig. 1, and the camera 602 may be similar to the camera 102 in Fig. 1; the camera 602 is fixed to the movable robot 601 and has a fixed-focus lens. The computing device 603 may be communicatively coupled to the robot 601 and the industrial camera 602 to realize information exchange. For example, the computing device 603 may communicate with the robot 601 and the camera 602 via a wired or wireless data link, to send instructions (e.g. movement instructions, capture instructions, etc.) to the robot 601 and camera 602 and acquire data (e.g. captured images, etc.) therefrom. The computing device 603 may be a computer (PC), a programmable logic controller (PLC) and/or any suitable control device, to realize the method for focusing an industrial camera according to embodiments of the present disclosure (e.g. any one or more steps of the method 200 described above). Since the automatic focusing is not realized by the industrial camera itself, occupancy of camera storage space by a focusing algorithm and camera instability are avoided, so the method can be flexibly applied to various combinations of cameras and lenses.

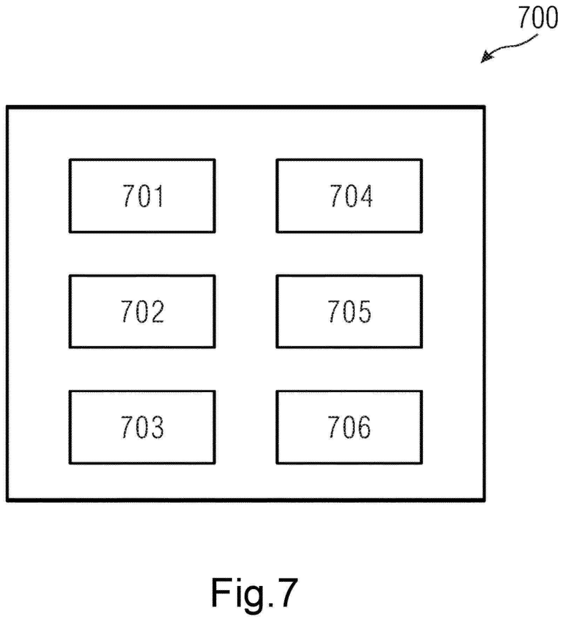

Fig. 7 shows a block diagram of an exemplary apparatus for focusing an industrial camera according to an embodiment of the present disclosure. For example, the apparatus 700 may be the computing device 603 in the system 600 of Fig. 6. The apparatus 700 comprises an image capturing unit 701, an image determining unit 702, an image evaluating unit 703, a direction determining unit 704 and a position estimating unit 705. To enable information transmission between the apparatus 700 and the industrial camera and robot, the apparatus 700 further comprises a communication unit 706; the communication unit 706 may be configured to send instructions to the robot and industrial camera and acquire data from the robot and industrial camera.

The image capturing unit 701 is configured to move the robot at a first step length, and acquire a first target image of a target object captured by the industrial camera at a first plurality of positions respectively.

The image determining unit 702 is configured to determine a first ROI image in the first target image according to a reference pattern, the first ROI image corresponding to an ROI in a focusing region of the industrial camera.

The image evaluating unit 703 is configured to evaluate the first ROI images determined at the first plurality of positions to generate a first plurality of clarity values.

The direction determining unit 704 is configured to determine a unimodal search direction based on the first plurality of clarity values.

Once the direction determining unit 704 has determined the unimodal search direction, the image capturing unit 701 is further configured to: move the robot at a second step length according to the unimodal search direction, and acquire a second target image of the target object captured by the industrial camera at a second plurality of positions respectively, the second step length being smaller than the first step length.

Once the direction determining unit 704 has determined the unimodal search direction, the image determining unit 702 is further configured to: determine a second ROI image in the second target image according to the reference pattern, the second ROI image corresponding to the ROI in the focusing region of the industrial camera.

Once the direction determining unit 704 has determined the unimodal search direction, the image evaluating unit 703 is further configured to evaluate the second ROI images determined at the second plurality of positions to generate a second plurality of clarity values.

The position estimating unit 705 is configured to estimate the position of clearest focus based on a portion of the first plurality of clarity values and a portion of the second plurality of clarity values.

In some embodiments, the reference pattern comprises pattern sets arranged in a first direction, each of the pattern sets comprising a first region and a second region, the first region having a first color, and the second region having a second color different from the first color. In some embodiments, the reference pattern may be a checkerboard texture pattern.

In some embodiments, the image evaluating unit 703 may be further configured to: based on the grayscale of each pixel point of the first ROI images determined at the first plurality of positions, using a first image evaluation function to evaluate the first ROI images to generate a first plurality of clarity values; based on the grayscale of each pixel point of the second ROI images determined at the second plurality of positions, using a second image evaluation function to evaluate the second ROI images to generate a second plurality of clarity values; wherein the first image evaluation function and the second image evaluation function comprise gradient functions.

In some embodiments, the gradient function may comprise a gradient function based on the Sobel operator.

In some embodiments, the direction determining unit 704 may be further configured to: identify the longest increasing subsequence of the first plurality of clarity values; determine a position movement direction corresponding to the longest increasing subsequence as the unimodal search direction.

In some embodiments, the position estimating unit 705 may be further configured to: use curve fitting to estimate the position of clearest focus, based on a final plurality of clarity values in the longest increasing subsequence of the first plurality of clarity values and multiple consecutively decreasing clarity values in the second plurality of clarity values.

In some examples, the image capturing unit 701 of the apparatus 700 may also be realized as two separate units, namely a first image capturing unit and a second image capturing unit, to realize method steps 201 and 205 in Fig. 2 respectively. In some examples, the image determining unit 702 of the apparatus 700 may also be realized as two separate units, namely a first image determining unit and a second image determining unit, to realize method steps 202 and 206 in Fig. 2 respectively. In some examples, the image evaluating unit 703 of the apparatus 700 may also be realized as two separate units, namely a first image evaluating unit and a second image evaluating unit, to realize method steps 203 and 207 in Fig. 2 respectively.

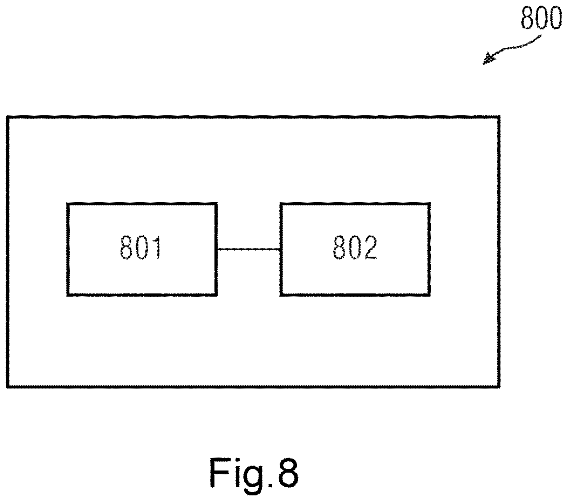

Fig. 8 shows a block diagram of an exemplary computing device 800 for focusing an industrial camera according to an embodiment of the present disclosure. The computing device 800 comprises a processor 801 and a memory 802 coupled to the processor 701. The memory 802 is used to store computer-executable instructions which, when executed, cause the processor 801 to perform the method in the above embodiments (e.g. any one or more steps of method 200 above).

Furthermore, alternatively, the above method may be realized by means of a computer-readable storage medium. The computer-readable storage medium carries computer-readable program instructions for implementing the embodiments of the present disclosure. The computer-readable storage medium may be a tangible device capable of holding and storing instructions used by an instruction execution device. The computer-readable storage medium may for example be, but is not limited to being, an electrical storage device, a magnetic storage device, an optical storage device, an electromagnetic storage device, a semiconductor storage device, or any suitable combination of the above. More specific examples of computer-readable storage media (a non-exhaustive list) include: a portable computer disk, hard disk, random access memory (RAM), read-only memory (ROM), erasable programmable read-only memory (EPROM or flash memory), static random access memory (SRAM), portable compact disk read-only memory (CD-ROM), digital versatile disk (DVD), memory stick, floppy disk, mechanical coding device, such as a bump-in-groove structure or punched card with instructions stored thereon, and any suitable combination of the above. The computer-readable storage medium used here is not construed as being a momentary signal itself, such as a radio wave or another freely propagating electromagnetic wave, an electromagnetic wave propagating through a wave guide or another transmission medium (e.g. light pulses through an optic fiber cable), or an electric signal transmitted through an electric wire.

Thus, in another embodiment, the present disclosure proposes a computer-readable storage medium, having stored thereon computer-executable instructions for performing the method in the embodiments of the present disclosure.

In another embodiment, the present disclosure proposes a computer program product, tangibly stored on a computer-readable storage medium and comprising computer-executable instructions which, when executed, cause at least one processor to perform the method in the embodiments of the present disclosure.

Generally, the exemplary embodiments of the present disclosure may be implemented in hardware or dedicated circuitry, software, firmware, logic, or any combination thereof. Some aspects may be implemented in hardware, while other aspects may be implemented in software or firmware executable by a controller, microprocessor or other computing device. When the aspects of the embodiments of the present disclosure are illustrated or described as block diagrams or flow charts or shown using other graphical forms, it will be understood that the boxes, apparatuses, systems, techniques or methods described here may be implemented as non-limiting examples in hardware, software, firmware, dedicated circuitry or logic, general-purpose hardware or controllers or other computing devices, or combinations thereof.

The computer-readable program instructions or computer program product for implementing the embodiments of the present disclosure may also be stored on the Cloud; when they need to be called, a user can access the computer-readable program instructions stored on the Cloud for implementing an embodiment of the present disclosure via mobile internet, a fixed network or another network, and thereby implement the technical solution disclosed in accordance with the embodiments of the present disclosure.

Although embodiments of the present disclosure have been described with reference to a number of specific embodiments, it should be understood that the embodiments of the present disclosure are not limited to the specific embodiments disclosed. The embodiments of the present disclosure are intended to encompass various modifications and equivalent arrangements included within the spirit and scope of the attached claims. The scope of the claims corresponds to the broadest interpretation, and thus includes all such modifications and equivalent structures and functions.

**Claims**

1. A method for focusing an industrial camera, the industrial camera being fixed to a movable robot and having a fixed-focus lens, the method comprising the following steps:

   S1, moving the robot at a first step length to use the industrial camera to capture a first target image of a target object at a first plurality of positions respectively;

   S2, determining a first ROI image in the first target image according to a reference pattern, the first ROI image corresponding to an ROI in a focusing region of the industrial camera;

   S3, evaluating the first ROI images determined at the first plurality of positions to generate a first plurality of clarity values;

   S4, determining a unimodal search direction based on the first plurality of clarity values;

   S5, moving the robot at a second step length according to the unimodal search direction to use the industrial camera to capture a second target image of the target object at a second plurality of positions respectively, the second step length being smaller than the first step length;

   S6, determining a second ROI image in the second target image according to the reference pattern, the second ROI image corresponding to the ROI in the focusing region of the industrial camera;

   S7, evaluating the second ROI images determined at the second plurality of positions to generate a second plurality of clarity values;

   S8, estimating a position of clearest focus based on a portion of the first plurality of clarity values and a portion of the second plurality of clarity values.

2. The method as claimed in claim 1, wherein the reference pattern comprises pattern sets arranged in a first direction, each of the pattern sets comprising a first region and a second region, the first region having a first color, and the second region having a second color different from the first color.

3. The method as claimed in claim 2, wherein the reference pattern is a checkerboard texture pattern.

4. The method as claimed in claim 1, wherein step S3 comprises: based on the grayscale of each pixel point of the first ROI images determined at the first plurality of positions, using a first image evaluation function to evaluate the first ROI images to generate a first plurality of clarity values, the first image evaluation function comprising a gradient function.

5. The method as claimed in claim 1, wherein step S6 comprises:
based on the grayscale of each pixel point of the second ROI images determined at the second plurality of positions, using a second image evaluation function to evaluate the second ROI images to generate a second plurality of clarity values, the second image evaluation function comprising a gradient function.

6. The method as claimed in claim 4 or 5, wherein the gradient function comprises a gradient function based on the Sobel operator.

7. The method as claimed in claim 1, wherein step S4 comprises:

   S41, identifying a longest increasing subsequence of the first plurality of clarity values;
   S42, determining a position movement direction corresponding to the longest increasing subsequence as the unimodal search direction.

8. The method as claimed in claim 7, wherein step S8 comprises:
using curve fitting to estimate the position of clearest focus, based on a final plurality of clarity values in the longest increasing subsequence of the first plurality of clarity values and multiple consecutively decreasing clarity values in the second plurality of clarity values.

9. A computing device, comprising:

   a processor; and
   a memory, used to store computer-executable instructions which, when executed, cause the processor to perform the following steps:

      S1, moving the robot at a first step length to use the industrial camera to capture a first target image of a target object at a first plurality of positions respectively;
      S2, determining a first ROI image in the first target image according to a reference pattern, the first ROI image corresponding to an ROI in a focusing region of the industrial camera;
      S3, evaluating the first ROI images determined at the first plurality of positions to generate a first plurality of clarity values;
      S4, determining a unimodal search direction based on the first plurality of clarity values;
      S5, moving the robot at a second step length according to the unimodal search direction to use the industrial camera to capture a second target image of the target object at a second plurality of positions respectively, the second step length being smaller than the first step length;
      S6, determining a second ROI image in the second target image according to the reference pattern, the second ROI image corresponding to the ROI in the focusing region of the industrial camera;
      S7, evaluating the second ROI images determined at the second plurality of positions to generate a second plurality of clarity values;
      S8, estimating a position of clearest focus based on a portion of the first plurality of clarity values and a portion of the second plurality of clarity values.

10. The computing device as claimed in claim 9, wherein the reference pattern comprises pattern sets arranged in a first direction, each of the pattern sets comprising a first region and a second region, the first region having a first color, and the second region having a second color different from the first color.

11. The computing device as claimed in claim 10, wherein the reference pattern is a checkerboard texture pattern.

**12.** The computing device as claimed in claim 9, wherein step S3 comprises: based on the grayscale of each pixel point of the first ROI images determined at the first plurality of positions, using a first image evaluation function to evaluate the first ROI images to generate a first plurality of clarity values, the first image evaluation function comprising a gradient function.

**13.** The computing device as claimed in claim 9, wherein step S6 comprises:
based on the grayscale of each pixel point of the second ROI images determined at the second plurality of positions, using a second image evaluation function to evaluate the second ROI images to generate a second plurality of clarity values, the second image evaluation function comprising a gradient function.

**14.** The computing device as claimed in claim 12 or 13, wherein the gradient function comprises a gradient function based on the Sobel operator.

**15.** The computing device as claimed in claim 9, wherein step S4 comprises:

S41, identifying a longest increasing subsequence of the first plurality of clarity values;
S42, determining a position movement direction corresponding to the longest increasing subsequence as the unimodal search direction.

**16.** The computing device as claimed in claim 9, wherein step S8 comprises:
using curve fitting to estimate the position of clearest focus, based on a final plurality of clarity values in the longest increasing subsequence of the first plurality of clarity values and multiple consecutively decreasing clarity values in the second plurality of clarity values.

**17.** An apparatus for focusing an industrial camera, the industrial camera being fixed to a movable robot and having a fixed-focus lens, the apparatus comprising:

an image capturing unit, configured to move the robot at a first step length, and acquire a first target image of a target object captured by the industrial camera at a first plurality of positions respectively;
an image determining unit, configured to determine a first ROI image in the first target image according to a reference pattern, the first ROI image corresponding to an ROI in a focusing region of the industrial camera;
an image evaluating unit, configured to evaluate the first ROI images determined at the first plurality of positions to generate a first plurality of clarity values;
a direction determining unit, configured to determine a unimodal search direction based on the first plurality of clarity values;
wherein, once the direction determining unit has determined the unimodal search direction:

the image capturing unit is further configured to: move the robot at a second step length according to the unimodal search direction, and acquire a second target image of the target object captured by the industrial camera at a second plurality of positions respectively, the second step length being smaller than the first step length;
the image determining unit is further configured to: determine a second ROI image in the second target image according to the reference pattern, the second ROI image corresponding to the ROI in the focusing region of the industrial camera;
the image evaluating unit is further configured to evaluate the second ROI images determined at the second plurality of positions to generate a second plurality of clarity values; and
a position estimating unit, configured to estimate a position of clearest focus based on a portion of the first plurality of clarity values and a portion of the second plurality of clarity values.

**18.** A computer-readable storage medium, having stored thereon computer-executable instructions for performing the method as claimed in any one of claims 1 - 8.

**19.** A computer program product, tangibly stored on a computer-readable storage medium and comprising computer-executable instructions which, when executed, cause at least one processor to perform the method as claimed in any one of claims 1 - 8.

Fig.1

200

201

202

203

204

205

206

207

208

Fig.2

Fig.3

400

401

4001   4002

Fig.4

Fig.5

Fig.6

700

| 701 | 704 |
| 702 | 705 |
| 703 | 706 |

Fig.7

800

Fig.8

## INTERNATIONAL SEARCH REPORT

| | International application No. |
|---|---|
| | **PCT/CN2020/114892** |

| A. | CLASSIFICATION OF SUBJECT MATTER |
|---|---|

G03B 13/36(2021.01)i;  G02B 7/36(2021.01)i

According to International Patent Classification (IPC) or to both national classification and IPC

| B. | FIELDS SEARCHED |
|---|---|

Minimum documentation searched (classification system followed by classification symbols)

G03B, G02B, H04N

Documentation searched other than minimum documentation to the extent that such documents are included in the fields searched

Electronic data base consulted during the international search (name of data base and, where practicable, search terms used)

CNPAT, CNKI, EPODOC, WPI: 工业相机, 对焦, 聚焦, 多个, 若干个, 位置, 步长, 参考, 模板, 爬坡, 方向, 灰度, 梯度, industrial camera, focus+, multi+, several, position, step, referenc+, template, climb+, direction, grayscale, gradient

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 107748428 A (GOERTEK INC.) 02 March 2018 (2018-03-02) description, paragraphs [0026]-[0041], and figure 1 | 1, 9, 17-19 |
| A | CN 108628061 A (LUSTER LIGHTTECH GROUP) 09 October 2018 (2018-10-09) entire document | 1-19 |
| A | CN 105938243 A (SOUTH CHINA UNIVERSITY OF TECHNOLOGY) 14 September 2016 (2016-09-14) entire document | 1-19 |
| A | CN 1420379 A (UMAX DATA SYSTEMS INC.) 28 May 2003 (2003-05-28) entire document | 1-19 |
| A | CN 111031245 A (SUZHOU LIGHTVIEW INTELLIGENT TECHNOLOGY CO., LTD.) 17 April 2020 (2020-04-17) entire document | 1-19 |
| A | DE 202004001745 U1 (SICK AG) 22 April 2004 (2004-04-22) entire document | 1-19 |
| A | JP 2018151415 A (CANON K. K.) 27 September 2018 (2018-09-27) entire document | 1-19 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 May 2021** | **26 May 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

EP 4 194 944 A1

INTERNATIONAL SEARCH REPORT
Information on patent family members

International application No.

**PCT/CN2020/114892**

| Patent document cited in search report | | | Publication date (day/month/year) | Patent family member(s) | | | Publication date (day/month/year) |
|---|---|---|---|---|---|---|---|
| CN | 107748428 | A | 02 March 2018 | None | | | |
| CN | 108628061 | A | 09 October 2018 | CN | 108628061 | B | 29 September 2020 |
| CN | 105938243 | A | 14 September 2016 | CN | 105938243 | B | 13 April 2018 |
| CN | 1420379 | A | 28 May 2003 | None | | | |
| CN | 111031245 | A | 17 April 2020 | None | | | |
| DE | 202004001745 | U1 | 22 April 2004 | None | | | |
| JP | 2018151415 | A | 27 September 2018 | None | | | |

Form PCT/ISA/210 (patent family annex) (January 2015)

21